# EUROPEAN PATENT APPLICATION

(11) **EP 3 079 285 A1**
(43) Date of publication of application: **12.10.2016**
(21) Application number: 15290094.0
(22) Date of filing: 09.04.2015
(51) Int. Cl.: H04J 14/02, H04B 10/079, H04B 10/61

(54) **Performance monitoring and projection switching in optical transmission systems**

(71) Applicant: ALCATEL LUCENT, 92100 Boulogne-Billancourt (FR)
(72) Inventor: Raddatz, Lutz, 70435 Stuttgart (DE)
(74) Representative: Reichl, Wolfgang

(57) **Abstract**

The present document relates to a network element comprising a plurality of optical receivers (150) and a demultiplexing entity (140) with a plurality of output ports and an input port being adapted to be coupled with an optical transmission path (110) carrying a plurality of optical channels according to a WDM grid, each optical receiver (150) being coupled with a certain output port of the demultiplexing entity (140), said demultiplexing entity (140) providing an unfiltered coupling of optical channels received at the input port to each of said plurality of output ports, wherein said demultiplexing entity (140) further comprises an additional port being coupled with a monitoring optical receiver (170), said monitoring optical receiver (170) being a coherent receiver comprising a local oscillator for tuning the receiver to a certain receiving wavelength, wherein the local oscillator of the monitoring optical receiver (170) is adapted to be successively tuned to multiple frequencies, said multiple frequencies being correlated with the wavelengths of the optical channels provided to the input port, wherein the monitoring optical receiver (170) is adapted to provide information regarding the signal quality of optical signals included in the respective optical channels to a control entity (180) in order to derive, in case of a degradation or loss of optical signal of the optical channel, information regarding the component or section of the optical transmission system (100) causing said degradation or loss of optical signal.

## Description

The present document relates to a network element included in an optical system such as an optical transport network (OTN) or other optical transmission system. In particular, the present document relates to network elements including colorless add/drop multiplexer/demultiplexer for providing enhanced performance monitoring capabilities and/or enhanced protection switching capabilities.

Performance monitoring and fault detection is part of (dense) wavelength division multiplex (WDM/DWDM) transmission systems. Systems monitor many analog (voltage, optical power, temperature,...) and digital performance information (bit error rates, loss-of-frame state etc.). This performance information is used by the operator to check the health of the system and to analyze problems. It is however not easily possible to determine the root cause of a detected problem, e.g. the location of defect component, from obtained data. For instance, a problem reported at the optical receiver or receive part of a circuit pack may stem from a defect at this card, but may also be caused from an undetected defect at the optical transmitter or transmit part of the upstream circuit pack. This means that determining the root cause may require extensive manual intervention (replacing system components until the defect part is located). During this time, the affected part of the system is not available for normal operation.

Traffic protection is also used in many WDM/DWDM systems and in the routing or switching equipment connected to these systems. Traffic protection usually involves a backup transmitter/receiver set, and backup line capacity (i.e. an unused wavelength) on the transmission system. When a fault is detect that requires the backup ("protecting") equipment to take over from the defect equipment, the controller of the system issues the necessary instructions to reconfigure the system accordingly. Depending on how this protection switching is implemented, many components of the system may need to be re-configured, which can result in a significant delay until the traffic is re-established.

It is an objective of the present disclosure to provide effective performance monitoring measures which facilitate the localization of a failure. A further objective is to provide enhanced protection switching capabilities.

According to a first aspect, an optical network element is disclosed. The network element comprises a plurality of optical receivers for receiving different channels comprising optical signals using different wavelengths according to a WDM grid. Furthermore, the network element includes a demultiplexing entity with a plurality of output ports, each output port being coupled with an optical receiver of said plurality of optical receivers. In addition, the network element comprises input port being adapted to be coupled with an optical transmission path carrying a plurality of optical channels according to the WDM grid. Said demultiplexing entity provides an unfiltered coupling of optical channels received at the input port to each of said plurality of output ports. In other words, the demultiplexing entity shows in the spectral range covered by the optical channels no or essentially no spectral filtering behavior. Thus, any received optical channel (at the input port) is coupled to any output port so that the optical receivers receive all wavelengths as input. The optical receivers may be coherent receivers. Each receiver may comprise a respective local oscillator for tuning the receiver to a predetermined wavelength. The network element may further comprise a plurality of optical transmitters for the respective channels.

The demultiplexing entity further comprises an additional port being coupled with a monitoring optical receiver. Said monitoring optical receiver may be a coherent receiver comprising a local oscillator for tuning the receiver to a certain receiving wavelength. In other words, the monitoring optical receiver is adapted to change the receiving wavelength according to the present need based on choosing the appropriate local oscillator frequency. The monitoring optical receiver and in particular its local oscillator may be controlled by a control signal, e.g. received from a control unit of the network element.

The local oscillator of the monitoring optical receiver may be adapted to be successively tuned to multiple frequencies, said multiple frequencies being correlated with the wavelengths of the optical channels provided to the input port. In other words, multiple optical channels provided at the output ports of the demultiplexing entity are successively scanned by the monitoring optical receiver by changing, specifically stepwise changing the frequency of the local oscillator. The monitoring optical receiver may be further adapted to gather information regarding the signal quality of optical signal included in the respective-optical channels. For example, the monitoring optical receiver comprise performance calculating means, e.g. a performance monitoring unit for gathering performance parameters of the optical signal comprised within a certain selected optical channel. Said gathered information is provided to a control entity in order to derive, in case of a degradation or loss of optical signal of the optical channel, information regarding the component or section of the optical transmission system causing said degradation or loss of optical signal.

Said network element is advantageous because, based on the additional monitoring optical receiver, it is possible to selectively analyze all WDM channels thereby enabling an improved performance and fault analysis and enabling an improved localization of the degraded or failed system component or section.

According to embodiments, the monitoring optical receiver comprises performance calculating means for deriving analog and/or digital parameters characterizing the quality of signal included in a respective optical channel. For example, said performance calculating means may be adapted to provide quality of signal information. Such information may be, for example, input power, chromatic dispersion, differential group delay, error vector magnitude, number of errors corrected by the FEC and/or number of uncorrectable errors. Based on said parameters it is possible to determine information regarding the transmission quality of a certain transmitted optical channel and possible system degradation can be detected based on a degradation of the performance parameters associated with a certain optical channel.

According to embodiments, the demultiplexing entity comprises a passive optical splitter, specifically, a wideband optical splitter. Such passive optical splitter is adapted to distribute each optical channel of the plurality of optical channels provided to the input port of said passive optical splitter to all output ports of said passive optical splitter. In other words, the passive optical splitter provides a non-frequency-selective distribution of all received optical channels to each output port.

According to embodiments, the optical receivers coupled with the output ports of the demultiplexing entity are coherent optical receivers. So, in other words, not only the monitoring optical receiver but also the working optical receivers (which are currently processing the optical signals included in the respective optical channels) can be tuned to a certain receiving wavelength. Said coherent optical receivers may also comprise a local oscillator and the desired receiving wavelength may be chosen by tuning the local oscillator frequency to a frequency corresponding to said receiving wavelength.

According to embodiments, the monitoring optical receiver is adapted to perform a monitoring routine, wherein during said monitoring routine the local oscillator is consecutively tuned to wavelengths correlated with selected wavelengths of WDM channels transmitted via the optical transmission path in order to consecutively monitor the quality of optical signal included in the respective WDM channels. Thereby, for each WDM channel, performance information is gathered in repetitive periods of time. Said information may be stored and a long term behavior of the channel performance may be derived in order to be able to recognize channel degradation at a very early stage.

According to embodiments, the (working) optical receivers are adapted to provide information regarding the signal quality of the received optical signals. Each (working) optical receiver may also comprise a performance monitoring unit for gathering performance parameters of the optical signal comprised within the optical channel processed by the respective optical channel. So, not only the monitoring optical receiver but also the working optical receiver processing the respective WDM channel gathers performance information. Said performance information may be provided to the control entity. Thereby, the control entity receives performance information for each WDM channel from two independent receivers. Using two sets of performance information for each optical channel, improved failure detection is possible.

According to embodiments, after receiving protection switching information indicating an impaired optical channel, the network element is adapted to tune the local oscillator of the monitoring optical receiver to a frequency corresponding to the wavelength of the impaired optical channel processed in order to receive the optical signal included in said impaired optical channel by means of said monitoring optical receiver. That way, the monitoring optical receiver may replace a defect or impaired working receiver within the network element by tuning to the operating wavelength of this optical receiver. In other words, the monitoring optical receiver may not only be used for monitoring purposes but also as a backup receiver for replacing the impaired optical receiver. Due to the provision of all optical channels to the monitoring optical receiver, the time for performing protection switching is significantly reduced and no further switching is required.

Depending on the expected cause of the experienced problem, only the receiver may be replaced with the monitoring (backup) optical receiver. In addition, a similar architecture may be provided on the transmitter side where an additional multiplexer port and a spare transmitter may be provided. The spare transmitter may be a tunable transmitter that can be tuned to any of the transmission wavelengths of the WDM grid. Upon receipt of a signal from the receiving side, the spare transmitter may be tuned to the wavelength of the optical channel experiencing a problem. Then, the spare transmitter may be enabled and the previously active transmitter for this wavelength disabled. This provides further safety against malfunctions and impairments.

According to a further aspect, an optical transmission system is provided. The optical transmission system comprises at least one network element as described above. The optical transmission system further includes a control entity coupled with the monitoring optical receiver for receiving information regarding the quality of the optical signal included in a certain optical WDM channel. Preferably, the control entity is also coupled with the further (working) optical receivers in order to receive performance information from said optical receivers.

According to embodiments, the control entity is adapted to provide information regarding the component or section of the optical transmission system causing a degradation or loss of optical signal based on the comparison of information regarding the quality of the optical signal provided by the monitoring optical receiver and information regarding the quality of the optical signal provided by an optical receiver of said plurality of optical receivers. In other words, the control information receives performance information by two independent receivers. By comparing said information, conclusions regarding the root cause of an impairment or degradation of one or more optical channels can be concluded. The control entity may further provide a control signal to the transmitter side to replace the transmitter of an impaired channel with the spare transmitter.

According to a third aspect, a method for providing fault localization information in an optical WDM transmission system is provided. The optical transmission system comprises a plurality of optical receivers and a demultiplexing entity with a plurality of output ports and an input port being adapted to be coupled with an optical transmission path carrying a plurality of optical channels according to a WDM grid. Each optical receiver is coupled with a certain output port of the demultiplexing entity, said demultiplexing entity providing an unfiltered coupling of optical channels received at the input port to each of said plurality of output ports. The demultiplexing entity further comprises an additional port being coupled with a monitoring optical receiver, said monitoring optical receiver being a coherent receiver comprising a local oscillator for tuning the receiver to a certain receiving wavelength. The method comprises the steps of:
- successively tuning the local oscillator of the monitoring optical receiver to multiple frequencies, said multiple frequencies being correlated with the wavelengths of optical channels provided to the input port of the demultiplexing entity;
- gathering information regarding the signal quality of an optical signal included in a respective optical channel by the monitoring optical receiver and providing said information to a control entity;
- deriving, in case of a degradation or loss of optical signal of the optical channel, information regarding the component or section of the optical transmission system causing said degradation or loss of optical signal based on the signal quality information provided by the monitoring optical receiver.

According to embodiments, at least some optical receiver of said plurality of optical receivers gather information regarding the signal quality of the optical signal included in the optical channel associated with the respective optical receiver. The control entity compares the information regarding the quality of the optical signal provided by the monitoring optical receiver and information regarding the quality of the optical signal provided by the optical receiver in order to derive information regarding the component or section of the optical transmission system causing the degradation or loss of optical signal. So, the control entity receives two independent "opinions" regarding the signal quality of a respective optical channel based on which a localization of failure is possible.

According to a fourth aspect, an optical network element comprising a plurality of optical receivers and a demultiplexing entity is disclosed. The demultiplexing entity comprise a plurality of output ports and an.input port being adapted to be coupled with an optical transmission path carrying a plurality of optical channels according to a WDM grid. Each optical receiver of the network element is coupled with a certain output port of the demultiplexing entity. The demultiplexing entity is colorless, i.e. said demultiplexing entity provides an unfiltered coupling of optical channels received at the input port to each of said plurality of output ports. The demultiplexing entity further comprises at least one additional output port being coupled with a backup receiver, said backup receiver being a coherent receiver comprising a local oscillator for tuning the backup receiver to a certain receiving wavelength. After receiving protection switching information indicating an impaired optical channel, the network element is adapted to tune the local oscillator of the backup receiver to a frequency corresponding to the wavelength of the impaired optical channel.

Said optical network element is advantageous because by using coherent receivers coupled with a colorless demultiplexer forwarding all optical channels to said receivers, protection switching can be performed by merely tuning the frequency of the optical oscillator to a frequency corresponding to the wavelength of the respective optical channel. Due to the colorless architecture, further switching operations on the transmission path between the transmitting and receiving side are not necessary.

According to a fifth aspect, a method for providing protection switching in an optical WDM transmission system is provided. The transmission system comprises a plurality of optical receivers and a demultiplexing entity with a plurality of output ports and an input port being adapted to be coupled with an optical transmission path carrying a plurality of optical channels according to a WDM grid. Each optical receiver is coupled with a certain output port of the demultiplexing entity. Said demultiplexing entity provides an unfiltered coupling of optical channels received at the input port to each of said plurality of output ports. The demultiplexing entity further comprises at least one additional output port being coupled with a backup receiver, said backup receiver being a coherent receiver comprising a local oscillator for tuning the backup receiver to a certain receiving wavelength. The method comprises the steps of:
- receiving protection switching information indicating an impaired optical channel;
- tuning the local oscillator of the backup receiver to a frequency corresponding to the wavelength of the impaired optical channel.

Before occurrence of a protection switching event, in an embodiment, the backup receiver may be used as monitoring optical receiver. The local oscillator of the monitoring optical receiver may be successively tuned to multiple frequencies being correlated with the wavelengths of the optical channels provided to the input port of the demultiplexing entity in order to derive information regarding the signal quality of an optical signal included in a respective optical channel and the protection switching information is derived based on the signal quality information provided by said monitoring optical receiver.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
- Fig. 1: illustrates an example optical transmission system comprising a colorless multiplexer/demultiplexer; and
- Fig. 2: shows a portion of an example optical transmission system coupled with a central data switch.

Dense wavelength division multiplexing (DWDM) systems currently use bitrates up to 200Gb/s per channel. Per-channel bitrates of >40Gb/s typically use polarization-multiplexed QPSK or QAM modulation formats with coherent detection. This type of signal detection uses a local oscillator laser to convert the phase-modulated signal into amplitude variations detectable by photodiodes. Coherent receivers have the property that they can select the channel to be processed by tuning the local oscillator laser to the optical frequency of this channel. In other words, several optical channels of different wavelengths can be presented to a coherent receiver, and the receiver will only process the channel whose wavelength corresponds to that of its local oscillator.

This wavelength selective property of coherent receivers can be used in so-called "colorless drop" system architectures. Here several channels, comprising a subset of the full channel band of a DWDM system, or even the full band, are presented to one or more coherent receivers without demultiplexing them first in the optical domain. In the case where several coherent receivers are to be connected to a colorless drop node, wideband passive splitters are typically used to distribute the multichannel signal to several coherent receivers.

Similar to the colorless drop architectures, it is possible to design "colorless add" systems. Here the optical signals from different transmitters are combined by passive wideband combiners rather than in wavelength selective devices such as arrayed waveguide gratings. This essentially means that all the ports of a colorless add systems are identical, i.e. any wavelength can be added at any port without any re-configuration of the multiplex-structure.

The colorless add/drop architectures have advantages in terms of flexibility over systems with fixed wavelength routing. They can however also be used to implement novel performance monitoring and protection features, as shown below.

A node in a DWDM system may comprise one or several coherent interfaces that receive signals from colorless drop ports of a network section (i.e., these receivers all receive the same set of signal wavelengths). Each receiver processes the incoming signal and calculates analog and digital parameters which can be used to monitor the quality of the signal. Such parameters are, for instance, input power, chromatic dispersion, differential group delay, error vector magnitude, number of errors corrected by the FEC and number of uncorrectable errors. This data is usually collected by the central controller of the system for storage and to allow statistical analysis.

The system may comprise a free port (i.e. a free slot in the system and a free connection at the colorless add/drop optics). Thus, it is possible to add one additional coherent interface ("test interface"). The central controller can then instruct this interface to tune its receiver consecutively to each of the wavelengths used by the other interfaces connected to this network section, and collect the same performance monitoring data. The performance data measured by the test interface will not be perfectly identical to that of the working interfaces, since each receiver has somewhat different performance characteristics, and even the colorless drop ports have some variation. However, the central controller can collect this data, correlate it with the performance data from the other interfaces and evaluate its change over time. Thereby conclusions regarding the degraded working interface can be drawn and therefore the system has the ability to assist in the locating of a fault. This can be a significant improvement since without indication on where the faulty part is, several attempts (such as exchanging the downstream interface, exchanging the upstream interface, changing transmission system settings) may be necessary in order to determine the root cause of the degradation.

In addition, an enhanced protection switching method can be performed when using colorless add/drop multiplexer. Consider a node in a DWDM system where one or several coherent interfaces transmit and receive signals to/from colorless add/drop ports of the same network section (i.e., these interfaces are connected to the same add/drop components). Consider that these optical interfaces interface with a central data switch or matrix on their "client" side (such as an IP router or an OTN or multiservice switch) - either directly through an electrical backplane connection, or through an optical client interface.

Again, there may be a free port on the colorless add/drop connection to the DWDM system, and a free connection to the central switch or matrix. Then, it is possible to implement an n+m, specifically an n+1 equipment protection scheme which does not require any reconfiguration of the transmission system. The flow of the protection switch may be as follows:
1. Working interface detects degradation, either through performance monitoring parameters or through alarms, and reports to central controller;
2. Central controller instructs working interface to shut down transmitter, and central switch to change data connection to the protection interface;
3. Central controller instructs protection interface to tune transmitter and receiver to the wavelengths previously used by the working interface;
4. Central controller informs upstream transmitter of protection switch, either by instructing transmitter of protecting interface to send an appropriate signal (e.g. in the OTU signal structure) or via an alternative network management connection;
5. Central controller of node containing the upstream transmitter instructs working interface, central switch and protection interface to do the protection switch in the same manner.

Points 1.-4. switch the traffic on the node where the fault is detected. Since the root cause of the problem may be the upstream transmitter, this node also switches to the protection interface in point 5.

This protection scheme can be combined with the monitoring scheme as described above, i.e. the test interface can become the protection interface in case a protection switch is necessary. The performance monitoring / fault correlation capability is then of course not available until the failed interface has been exchanged.

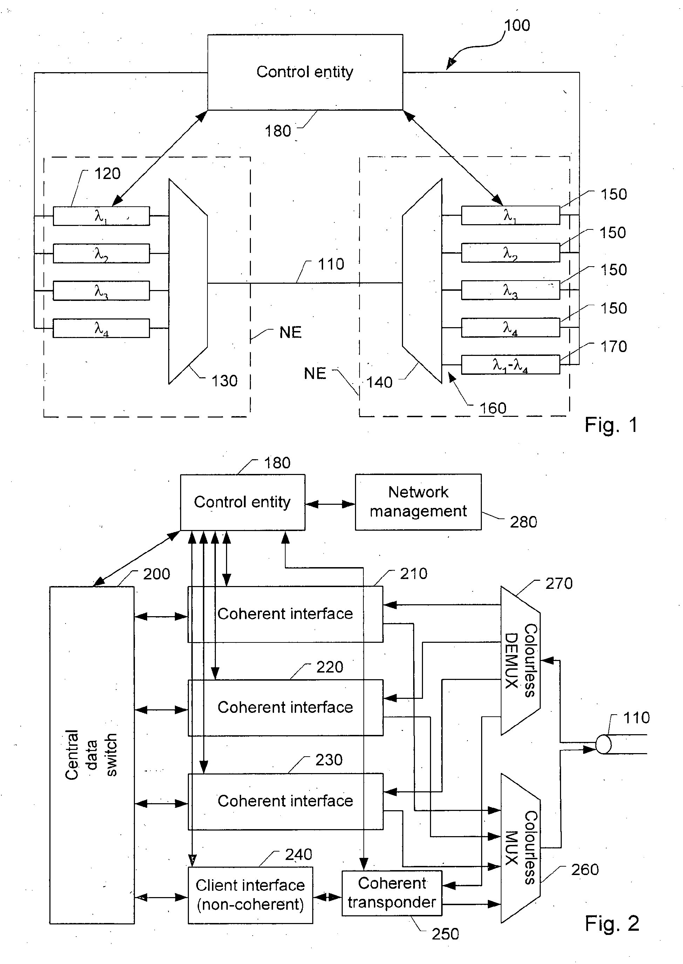

Fig. 1 schematically illustrates an example embodiment of an optical transmission system 100. The optical transmission system 100 comprises at least two network elements NE which are coupled via an optical transmission path 110, e.g. an optical fiber. The optical transmission system 100 is adapted to transmit multiple optical channels (WDM channels) on different optical wavelength, i.e. the optical transmission system 100 is a WDM or DWDM transmission system. In order to transmit optical signals via the optical transmission path 110, one of said network elements NE may form a transmitting network element NE and at least one further network element NE may form a receiving network element NE. According to other embodiments, the network elements NE may be adapted to transmit and receive optical signals, i.e. the network elements may comprise optical transceivers which are adapted to transmit and receive optical signals.

For the sake of simplicity, it is assumed that one network element NE (e.g. the left network element) of the optical transmission system 100 of Fig. 1 is the transmitting network element NE and the further network element NE (e.g. the right network element) is the receiving network element NE. The transmitting network element NE comprises a plurality of optical transmitters 120. Each transmitter 120 is coupled with an input port of a multiplexing entity 130 and may provide optical signals including data to be transmitted at a certain wavelength λ1 - λ4 of the WDM/DWDM grid. The multiplexing entity 130 may receive the optical signals provided by the optical transmitters 120 and provide said optical signals to an output port which is coupled with the optical transmission path 110. The multiplexing entity 130 may be, for example, an optical combiner, specifically a passive optical combiner which is adapted to collect the optical signals provided by the respective optical transmitters 120 and provide them to the optical transmission path 110. In other words, the multiplexing entity 130 may form a colorless add component which is adapted to provide the optical signals received at the input ports to the output port without any optical filtering.

The receiving network entity NE comprises a similar structure. The optical signals including multiple WDM channels provided via the optical transmission path 110 are received by a demultiplexing entity 140. More in detail, the demultiplexing entity 140 comprises an input port which is coupled with the optical transmission path 110. In addition, the demultiplexing entity 140 comprises multiple output ports to which the optical signals received at the input port are provided. The demultiplexing entity 140 is adapted to provide an unfiltered coupling of the optical WDM channels received at the input port to each of said output ports. In other words, the demultiplexing entity 140 may provide all WDM channels which are received at the input port to each of the output ports without any optical filtering. For example, the demultiplexing entity may comprise an optical splitter, specifically a passive optical splitter providing wideband splitting of optical signal. In other words, the demultiplexing entity 140 may be a colorless drop entity.

At the output ports of the demultiplexing entity 140, a plurality of optical receivers 150 may be provided. Said optical receivers 150 may be in the following referred to as working optical receivers, thereby indicating that said optical receivers are typically used for receiving the optical signals provided by the optical transmitters 120 of the transmitting network element NE. As already mentioned before, each optical receiver 150 receives multiple WDM channels. In order to be able to recover data included in one of said plurality of WDM channels, the optical receivers 150 are coherent optical receivers. A coherent optical receiver comprises a local oscillator being adapted to be tuned to a certain frequency, said frequency corresponding to a certain transmission wavelength according to the WDM grid. Thereby, the optical receiver 150 is able to selectively receive optical signals of a certain WDM channel. In other words, the coherent receiver is adapted to process the optical signal included in a WDM channel whose wavelength corresponds to the frequency of its local oscillator. Thereby, a wavelength-selective reception is possible without any optical filtering in the optical domain.

As shown in fig. 1, the demultiplexing entity 140 of the receiving network element NE may comprise at least one further output port which is - at least before the occurrence of a protection switching event - not used for receiving optical signals provided by the transmitting network element NE. Said further output port may be in the following referred to as monitoring port 160 or additional output port. Similar to the output ports coupled with the working optical receivers 150, all optical signals transmitted via the optical transmission path 110, specifically optical signals of all optical WDM channels transmitted via the optical transmission path 110 are provided to said monitoring port 160. The monitoring port 160 is coupled with a monitoring optical receiver 170. Said monitoring optical receiver 170 is constituted by or includes a coherent optical receiver. More in detail, the monitoring optical receiver 170 comprises a local oscillator. The frequency of the local oscillator can be tuned according to the WDM channel which should be received by the monitoring optical receiver 170. So, due to the fact that all WDM channels included in the optical transmission path 110 are provided to the monitoring optical receiver 170, data of one of said WDM channels can be - in addition to a working optical receiver 150 processing said WDM channel- received by the monitoring optical receiver 170 depending on the chosen frequency of the local oscillator. In addition, optical signals included in said WDM channels can be consecutively received by tuning the local oscillator frequency stepwise to different frequencies corresponding to wavelengths of the WDM channels. Thereby, based on said monitoring optical receiver 170 it is possible to derive additional information (in addition to information provided by the working optical receiver 150 processing the same WDM channel) regarding the status of the optical transmission system, specifically in case of a failure.

The monitoring optical receiver 170 may comprise means for monitoring the quality of the received optical signal. More in detail, the monitoring optical receiver 170 may be adapted to process the incoming optical signal and calculate quality parameters which can be used for specifying the quality of the received optical signal. Such parameters may be, for example, the input power, a chromatic dispersion parameter, the differential group delay parameter, the error vector magnitude, the number of errors corrected by the Forward Error Correction (FEC) mechanism and/or the number of non-correctable errors. At least some of said quality parameters may be gathered during the operation of the monitoring optical receiver 170 in order to determine the quality of the optical signal transmitted in a respective optical WDM channel. Preferably, the monitoring optical receiver 170 is adapted to scan multiple WDM channels in consecutive periods of time thereby deriving information regarding the quality of the optical signals contained in the respective WDM channels. Said scanning of WDM channels is obtained by consecutively tuning the local oscillator of the monitoring optical receiver 170 to frequencies associated with the wavelengths of the respective WDM channels. The local oscillator of said monitoring optical receiver 170 may stay for a certain period of time at a certain frequency for gathering said quality parameters. After determining said quality parameters for a respective WDM channel, the local oscillator may be tuned to a frequency associated with a further WDM channel transmitted via the optical transmission path 110. Thereby, information regarding the quality of optical signals of all optical WDM channels transmitted via the optical transmission path 110 can be derived by means of the monitoring optical receiver 170.

The monitoring optical receiver 170 may be coupled with a control entity 180. Said control entity 180 may comprise an interface for receiving information regarding the quality of the optical signals of the WDM channels provided by the monitoring optical receiver 170. The control entity may be adapted to store said information and provide statistical analysis on said information.

Similar to the monitoring optical receiver 170, also the working optical receivers 150 may comprise means for monitoring the quality of the received optical signal. The working optical receivers 150 may process the incoming optical signal and calculate quality parameters which can be used for specifying the quality of the received optical signal. Such parameters may be, for example, the input power, a chromatic dispersion parameter, the differential group delay parameter, the error vector magnitude, the number of errors corrected by the Forward Error Correction (FEC) mechanism and/or the number of non-correctable errors. Said working optical receivers 150 may also be coupled with the control entity 180 for providing the gathered signal quality information to said control entity 180. So, in other words, the control entity 180 does not only receive the signal quality information provided by the monitoring optical receiver 170 (in certain intervals due to WDM channel scanning of the monitoring optical receiver 170) but also by the working optical receivers 150 which are currently handling the respective channel. So, in yet other words, the control entity 180 receives two independent information regarding the signal quality of a certain WDM channel from two different quality processing entities, namely, from the respective working optical receiver 150 and from the monitoring optical receiver 170. Based on said two independent pieces of information, it is possible to derive information regarding which component or section may be impaired when a loss of optical signal or signal degradation is detected.

In case of loss of optical signal or signal degradation detected at one or more working optical receivers 150, in state of the art optical transmission systems, the component causing the error has to be identified by means of trial and error. For example, in case of signal degradation in a certain WDM channel detected by the respective working optical receiver 150, the problem may occur because of a degraded transmitter or a degraded receiver. So, for fixing the problem it may be necessary to exchange the respective transmitter and the respective receiver. So, in other words several attempts (e.g. exchanging transmission and receiving parts) may be necessary to determine the root cause of the signal degradation or loss of signal.

In the following, some scenarios are described, illustrating the advantages of the current optical transmission system 100 with respect to failure localization:
1. The situation may be considered that the control entity 180 receives information from a working optical receiver 150 that the optical signal in a certain WDM channel is degraded but the monitoring optical receiver 170 does not detect any signal degradation in said WDM channel. Based on said information, it may be concluded that the working receiver 150 covering said WDM channel or the output port of the demultiplexing entity coupled with said working receiver 150 degraded/ shows a defect.
2. In another situation, the control entity 180 receives information from a certain working optical receiver 150 that the optical signal in a respective WDM channel (i.e. the one WDM channel associated with the certain working optical receiver 150) is degraded, and the monitoring optical receiver 170 does also detect signal degradation in said WDM channel. In this case, only the (single) WDM channel associated with the working optical receiver 150 that reports signal degradation is affected. For example, the monitoring optical receiver 170 only detects signal degradation when tuned to this WDM channel. Said degradation pattern may permit the conclusion that the optical transmitter 150 associated with said WDM channel or another transmission system component degraded but the working optical receiver 150 processing said WDM channel works correctly.
3. According to yet another situation, the control entity 180 receives information that the optical signal received by multiple working optical receivers 150 and the monitoring optical receiver 170 degraded. Said degradation pattern may point to a degradation of a component within the transmission system, e.g. an optical amplifier within the optical transmission link.
4. In case that only the monitoring optical receiver 170 provides degradation information and the working optical receivers 150 does to show degradation information, it might be concluded that the monitoring optical receiver 170 or the output of the demultiplexing entity 140 coupled with the monitoring optical receiver 170 degraded.

So, by using a monitoring optical receiver 170 which recurrently scans the optical channels provided to the working optical receivers 160 provides information which can be used for localizing a defect within the optical transmission system 100.

Fig. 2 shows a portion of an optical transmission system 100 which might be included in a network element NE of an optical transmission network. The optical transmission network portion comprises a central data switch 200 which might be constituted by a matrix of an IP router or the matrix of an OTN-switch. Said central data switch 200 may be coupled with a plurality of optical interfaces 210-240. The optical interfaces 210-230 are coherent optical interfaces comprising tunable optical coherent transceivers for transmitting and receiving optical signals on desired optical wavelength according to the WDM grid. In other words, the coherent optical transceivers of the optical interfaces 210-230 are adapted to tune their transmitting and receiving wavelengths as presently needed. More in detail, the coherent optical interfaces 210-230 comprise an optical transmitter with a tunable laser diode in order to transmit an optical signal on a certain WDM wavelength. Furthermore, the optical interfaces 210-230 comprise an optical receiver with a tunable local oscillator in order to receive a certain WDM wavelength.

In addition, the central data switch 200 is coupled with a non-coherent client interface 240. Said non-coherent client interface 240 may comprise an optical transceiver being adapted to transmit/receive optical signals on the fixed wavelength. Said non-coherent client interface 240 may be coupled with a coherent transponder 250 being adapted to transform -on the transmitting path-the optical signal provided by the non-coherent client interface 240 in a certain WDM wavelength. In addition, the coherent transponder 250 may be adapted -on the receiving path- to transform the received WDM wavelength into the fixed wavelength required by the non-coherent client interface 240. The coherent optical interfaces 210 - 230 and the coherent transponder 250 are coupled via a colorless multiplexer 260 (transmitting path), respectively, a colorless demultiplexer 270 (receiving path) with an optical transmission path 110, for example an optical fiber for transmitting multiple DWDM wavelength channels. By means of the coherent optical interfaces 210 - 230 and the non-coherent client interface 240 electric data provided by the central data switch 200 are transformed in the optical domain and - on the other hand - the optical data provided by the colorless demultiplexer 270 are transformed from the optical domain into the electrical domain.

The system further comprises a control entity 180 which is coupled with the central data switch 200, the coherent interfaces 210-230, the client interface 240 and the coherent transponder 250 for controlling the transmission and receiving of data as currently needed. The control entity 180 may be further coupled with a network management unit 280 which provides control information to the central controller 180 for managing the central data switch 200, the coherent interfaces 210-230, the client interface 240 and the coherent transponder 250 and/or provide information from other network elements or network nodes to above-mentioned components. In case that not all optical interfaces 210 -240 coupled with the central data switch 200 are currently used as working interfaces, i.e. for transmitting and receiving optical data, at least one coherent interface 210-230 might be used as monitoring optical interface previously described or as a backup interface for providing redundancy which can be used for protection switching. Preferably, at both sides of the optical transmission path 110 at least one redundant coherent transceiver is provided in order to enable protection switching of a certain degraded WDM channel by providing said channel via the redundant coherent transceivers provided on both sides of the optical transmission path 110.

In case that protection switching information is received at the control entity 180 (e.g. provided by the network management entity 280) indicating that a certain WDM channel has degraded, said control entity 180 may instruct the degraded working interface to shut down the optical transmitter. In addition, the control entity 180 may provide information to the central data switch to transmit the electrical data to the backup interface. Furthermore, the control entity 180 may instruct the optical transmitter and the optical receiver of the backup interface to tune their wavelengths to the wavelength previously provided through the degraded optical interface. The control entity 180 may further inform the upstream network element (which is currently handling the degraded WDM channel on the other side of the optical transmission path) of the protection switching task. Said information may be provided either by instructing the backup interface to send appropriate information (e.g. included in an overhead section of the frame structure of the OTN) or via the network management entity 280. After receiving said switching information at the upstream network element, the working interface currently handling the degraded WDM channel may be deactivated, the electric data to be transmitted may be provided to the backup interface and the transmitting and receiving wavelengths of the backup interface may be tuned to the respective wavelength previously used by the degraded working interface.

Due to the coherent architecture of the network elements, i.e. the usage of colorless multiplexers and colorless demultiplexers within the network nodes thereby providing all WDM wavelengths to the optical interfaces, protection switching is possible by simply tuning the backup interfaces to the wavelengths of the degraded WDM channel and informing the central data switch to provide the electrical data to the backup interface instead of the degraded working interface. There is no switching action necessary on any optical components provided within the optical transmission path 110 between the respective optical interfaces. As such, the downtime of the degraded WDM channel is significantly reduced. Thereby an n+1, or in general n+m protection switching scenario can be realized.

According to a preferred embodiment, a monitoring optical receiver 170 or monitoring optical interface as described above can be used as backup optical interface as well. In case that there is no impairment of the optical transmission system 100 (all WDM channels are working properly), the monitoring optical receiver 170 or monitoring optical interface might be used for scanning the WDM channels in order to derive additional information regarding the performance of each working WDM channel. In case of a degradation of a WDM channel, said additional information provided by the monitoring optical receiver 170 may be used for localizing the optical component or section causing a degradation of the WDM channel. In addition, after detecting a degraded WDM channel, said scanning of WDM channels might be stopped and the monitoring optical interface might be used as backup interface and - after performing upper mentioned protection switching routine - the data transmission may be provided via said backup interface, i.e. the backup interface replaces the degraded working interface.

In addition, the additional information provided by the monitoring optical interface might be used for a partial protection switching scenario in which only one optical interface handling certain WDM channel is deactivated and replaced by a backup interface. For example, due to the status information provided by the respective working optical receiver 150 and the monitoring optical receiver 170 it is concluded that the optical receiver handling certain WDM channel is degraded but the upstream optical transmitter is working properly. Based on said information, only the impaired working optical receiver 150 may be replaced by the backup interface and there is no protection switching performed at the upstream transmitter. So, based on the information derived by the monitoring optical interface, it is possible to perform a selective protection switching which may only relate to a certain network element thereby further reducing the downtime during protection switching.

The document describes two novel schemes in the context of coherent optical transmission in DWDM systems. The first scheme describes the use of an additional coherent receiver for better OAM capabilities, in particular refined failure location analysis. The second scheme applies coherent detection as an implementation of the well-known N+1 protection scheme. Of course, both schemas may be combined: The extended OAM capabilities may be used as an input criterion for the protection scheme, but this coupling between the schemes is optional, i.e. each of the schemes can also be used independently of the other.

Related to the second scheme, the description explicitly refers mainly to N+1 protection. However, the scheme can be generalized to N+M protection in general, with N+1 being a special case. In the general case, M backup receivers and M additional demultiplexer output ports are provided. In addition, the second scheme may be extended to cover N:M protection in addition to N+M.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Network element comprising a plurality of optical receivers (150) and a demultiplexing entity (140) with a plurality of output ports and an input port being adapted to be coupled with an optical transmission path (110) carrying a plurality of optical channels according to a WDM grid, each optical receiver (150) being coupled with a certain output port of the demultiplexing entity (140), said demultiplexing entity (140) providing an unfiltered coupling of optical channels received at the input port to each of said plurality of output ports, wherein said demultiplexing entity (140) further comprises an additional port being coupled with a monitoring optical receiver (170), said monitoring optical receiver (170) being a coherent receiver comprising a local oscillator for tuning the receiver to a certain receiving wavelength, wherein the local oscillator of the monitoring optical receiver (170) is adapted to be successively tuned to multiple frequencies, said multiple frequencies being correlated with the wavelengths of the optical channels provided to the input port, wherein the monitoring optical receiver (170) is adapted to provide information regarding the signal quality of optical signals included in the respective optical channels to a control entity (180) in order to derive, in case of a degradation or loss of optical signal of the optical channel, information regarding the component or section of the optical transmission system (100) causing said degradation or loss of optical signal.

2. Network element according to claim 1, wherein the monitoring optical receiver (170) comprises performance calculating means for deriving analog and/or digital parameters characterizing the quality of signal included in a respective optical channel.

3. Network element according to claim 1 or 2, wherein the demultiplexing entity (140) comprises a passive optical splitter, specifically, a wideband optical splitter.

4. Network element according to anyone of the preceding claims, wherein the optical receivers (150) coupled with the output ports of the demultiplexing entity (140) are coherent optical receivers.

5. Network element according to anyone of the preceding claims, wherein the monitoring optical receiver (170) is adapted to perform a monitoring routine, wherein during said monitoring routine the local oscillator is consecutively tuned to frequencies correlated with certain wavelengths of WDM channels transmitted via the optical transmission path (110) in order to consecutively monitor the quality of optical signals included in the respective WDM channels.

6. Network element according to anyone of the preceding claims, wherein the optical receivers (150) are adapted to provide information regarding the signal quality of the received optical signals.

7. Network element according to anyone of the preceding claims, wherein after receiving protection switching information indicating an impaired optical channel, the network element is adapted to tune the local oscillator of the monitoring optical receiver (170) to a frequency corresponding to the wavelength of the impaired optical channel in order to receive the optical signal included in said impaired optical channel by means of said monitoring optical receiver (170).

8. Optical transmission system comprising at least one network element (NE) according to anyone of the preceding claims, the optical transmission system further including a control entity (180) coupled with the monitoring optical receiver (170) for receiving information regarding the quality of the optical signal included in a certain optical WDM channel.

9. Optical transmission system according to claim 8, wherein the control entity (180) is adapted to compare the information regarding the quality of the optical signal included in a certain optical WDM channel provided by the monitoring optical receiver (170) with information regarding the quality of the optical signal included in the same WDM channel or another WDM channel provided by an optical receiver (150) of said plurality of optical receivers.

10. Optical transmission system according to claim 9, wherein the control entity (180) is adapted to provide information regarding the component or section of the optical transmission system causing a degradation or loss of optical signal based on the comparison of information regarding the quality of the optical signal provided by the monitoring optical receiver (170) and information regarding the quality of the optical signal provided by an optical receiver (150) of said plurality of optical receivers.

11. Method for providing fault localization information in an optical WDM transmission system (100), the optical transmission system (100) comprising a plurality of optical receivers (150) and a demultiplexing entity (140) with a plurality of output ports and an input port being adapted to be coupled with an optical transmission path (110) carrying a plurality of optical channels according to a WDM grid, each optical receiver (150) being coupled with a certain output port of the demultiplexing entity (140), said demultiplexing entity (140) providing an unfiltered coupling of optical channels received at the input port to each of said plurality of output ports, said demultiplexing entity (140) further comprising an additional port being coupled with a monitoring optical receiver (170), said monitoring optical receiver (170) being a coherent receiver comprising a local oscillator for tuning the receiver to a certain receiving wavelength, the method comprising the steps of:
- successively tuning the local oscillator of the monitoring optical receiver (170) to multiple frequencies, said multiple frequencies being correlated with the wavelengths of the optical channels provided to the input port of the demultiplexing entity (140);
- gathering information regarding the signal quality of an optical signal included in a respective optical channel by the monitoring optical receiver (170) and providing said information to a control entity (180);
- deriving, in case of a degradation or loss of optical signal of the optical channel, information regarding the component or section of the optical transmission system (100) causing said degradation or loss of optical signal based on the signal quality information provided by the monitoring optical receiver (170).

12. Method according to claim 11, wherein at least some optical receivers (150) of said plurality of optical receivers gather information regarding the signal quality of the optical signal included in the optical channel associated with the respective optical receiver (150) and wherein the control entity (180) compares the information regarding the quality of the optical signal provided by the monitoring optical receiver (170) and information regarding the quality of the optical signal provided by the optical receiver (150) in order to derive information regarding the component or section of the optical transmission system (100) causing the degradation or loss of optical signal.

13. Network element comprising a plurality of optical receivers (150) and a demultiplexing entity (140) with a plurality of output ports and an input port - being adapted to be coupled with an optical transmission path (110) carrying a plurality of optical channels according to a WDM grid, each optical receiver (150) being coupled with a certain output port of the demultiplexing entity (140), said demultiplexing entity (140) providing an unfiltered coupling of optical channels received at the input port to each of said plurality of output ports, wherein said demultiplexing entity (140) further comprises at least one additional output port being coupled with a backup receiver, said backup receiver being a coherent receiver comprising a local oscillator for tuning the backup receiver to a certain receiving wavelength, wherein, after receiving protection switching information indicating an impaired optical channel, the network element is adapted to tune the local oscillator of the backup receiver to a frequency corresponding to the wavelength of the impaired optical channel.

14. Method for providing protection switching in an optical WDM transmission system (100), the transmission system (100) comprising a plurality of optical receivers (150) and a demultiplexing entity (140) with a plurality of output ports and an input port being adapted to be coupled with an optical transmission path (110) carrying a plurality of optical channels according to a WDM grid, each optical receiver (150) being coupled with a certain output port of the demultiplexing entity (140), said demultiplexing entity (140) providing an unfiltered coupling of optical channels received at the input port to each of said plurality of output ports, wherein said demultiplexing entity (140) further comprises at least one additional output port being coupled with a backup receiver, said backup receiver being a coherent receiver comprising a local oscillator for tuning the backup receiver to a certain receiving wavelength, the method comprising the steps of:
- receiving protection switching information indicating an impaired optical channel;
- tuning the local oscillator of the backup receiver to a frequency corresponding to the wavelength of the impaired optical channel.

15. Method according to claim 14, wherein - before occurrence of a protection switching event- the backup receiver is used as monitoring optical receiver (170), wherein the local oscillator of the monitoring optical receiver (170) is successively tuned to multiple frequencies being correlated with the wavelengths of the optical channels provided to the input port of the demultiplexing entity (140) in order to derive information regarding the signal quality of an optical signal included in a respective optical channel and the protection switching information is derived based on the signal quality information provided by said monitoring optical receiver (170).
